# EUROPÄISCHE PATENTSCHRIFT

(11) **EP 2 636 512 B1**
(45) Veröffentlichungstag und Bekanntmachung des Hinweises auf die Patenterteilung: **18.05.2016**
(21) Anmeldenummer: 13158082.1
(22) Anmeldetag: 07.03.2013
(51) Int. Cl.: B29C 67/00

(54) **Verfahren und Vorrichtung zum schichtweisen Aufbau eines Formkörpers**
Method and apparatus for the layered construction of a moulded part
Procédé et dispositif destinés au montage en couches d'un corps de formage

(30) Priorität: 08.03.2012 DE 102012101939
(43) Veröffentlichungstag der Anmeldung: 11.09.2013
(73) Patentinhaber: Schwärzler, Klaus, 82291 Mammendorf (DE)
(72) Erfinder: Schwärzler, Klaus, 82291 Mammendorf (DE)
(74) Vertreter: Weickmann & Weickmann PartmbB

(56) Entgegenhaltungen:
- EP-A2- 0 431 924
- WO-A1-01/26023
- WO-A2-2005/107981
- US-A- 5 256 340
- US-A- 5 503 785

## Beschreibung

### I. Anwendungsgebiet

Die Erfindung betrifft ein Verfahren zum schichtweisen Aufbau eines Formkörpers aus aushärtendem Material, sowie eine Vorrichtung, die hierfür geeignet ist.

### II. Technischer Hintergrund

Wenn in der Vergangenheit ein Formkörper aus einem aushärtenden Material hergestellt werden sollte, so war hierfür zunächst die Herstellung einer entsprechenden Negativ-Form notwendig, in die das meist flüssige Ausgangs-Material eingebracht wurde und in der es aushärten konnte.

Der Aufwand der Herstellung einer Negativform lohnt sich jedoch erst, wenn diese Negativform mehrfach, am besten sehr häufig, wieder verwendet wird. Dementsprechend teuer war die Herstellung von solchen Formkörpern, die in kleiner Stückzahl oder gar als Einzelanfertigung hergestellt werden sollten, da ein anderes Herstellungsverfahren nicht möglich war.

Seit einigen Jahren ist jedoch durch das so genannte Prototyping die Herstellung ohne Negativform möglich, allerdings nur aus bestimmten Kunststoffen als Ausgangsmaterial und nur mit begrenzten Abmessungen bis beispielsweise 1 m³. Dabei sind zwei Verfahren zu unterscheiden, die beide in einem an die Form des herzustellenden Formkörpers nicht angepassten, meist kubusförmigen, Behälter ablaufen:

Beim so genannten 3D-Printing - **welches Gegenstand des vorliegenden Patentes ist** - wird mittels einer gesteuerten Düse, ähnlich wie bei einem Tintenstrahldrucker, auf der Bodenfläche des Behälters eine erste Schicht aus dem Körpermaterial aufgebracht im Bereich der Kontur des herzustellenden Formkörpers auf dieser Höhe. Das Körpermaterial ist sehr schnell aushärtend, so dass unmittelbar anschließend die nächste Schicht darüber aufgebracht werden kann und so fort, wobei sich die Querschnitte der Schichten jeweils geringfügig ändern um die gewünschte, sich in der Höhe ändernde, Kontur des Formkörpers zu erzielen.

Beim so genannten selektiven Aushärten - **welches nicht Gegenstand des vorliegenden Patentes ist -** besteht dagegen das Körpermaterial aus einem Material, welches zum Beispiel durch Wärme oder ein aufgebrachtes Bindemittel sehr schnell aushärtet. Dieses Körpermaterial wird zunächst in einer ersten Schicht über die gesamte Bodenfläche des Behälters aufgebracht. Anschließend wird nur in dem Bereich, der den Formkörper umfassen soll, diese pulverförmige Schicht aus Körpermaterial ausgehärtet, zum Beispiel mit einem darauf fokussierten Laserstrahl oder einer anderen eng begrenzten Wärmequelle so stark erhitzt, dass das pulverförmige Füllmaterial in diesen Bereichen sofort aushärtet. Anschließend wird eine weitere Schicht des pulverförmigen Materials über die gesamte Fläche des Behälters gelegt und entsprechend verfahren. Nach Fertigstellung des Formkörpers wird dieser aus dem Behälter entnommen und das umgebende, nicht ausgehärtete Umgebungsmaterial wird durch Abklopfen oder Abbürsten vom Formkörper entfernt.

Bei beiden Verfahren liegt in der Regel die Schichtdicke im Bereich von deutlich unter 1 mm, beim erstgenannten Verfahren in der Regel bei einem 1/10 mm. Dementsprechend werden für den Aufbau eines Formkörpers, der beispielsweise eine Höhe von 50 cm besitzt, teilweise mehr als 10 h benötigt.

Darüber hinaus sind die hierfür geeigneten Materialien teuer, so dass sie für die Herstellung großvolumiger Bauteile, die insbesondere keine allzu hohen Kosten verursachen dürfen, nicht infrage kommen.

Es gibt jedoch eine ganze Reihe von Formkörpern, die zu einem geringen Preis und mit einem großen Volumen hergestellt werden müssen, und für die deshalb diese Verfahren bisher nicht infrage kamen, beispielsweise Fertigbauteile aus Beton, Gussformen für den Metallguss, faserverstärkte Kunststoffteile für den sonder-Fahrzeugbau, insbesondere Bootsbau oder Karosseriebau von Personenkraftwagen sowie viele weitere Anwendungen.

In diesem Zusammenhang ist aus der WO 01/26023, die den nächstreichenden Stand der Technik darstellt, eine Herstellmethode zum schichtweisen Aufbau eine Formkörpers aus flüssigem oder pastösem, aushärtendem Material bekannt, wobei ein Aufbringen der nächsten Schicht erfolgt, bevor die darunterliegende Schicht ausgehärtet ist.

Ein Härten findet dort erst stromabwärts durch eine zusätzlich vorhandene Härteeinheit statt, die die aufgebrachte Schicht bestrahlt, was dort notwendig ist, da die einzelnen Aufbringungsstränge der Düse Füllmaterial und Härter aufbringen, die sich in dem aufgebrachten Strang erst durchmischen müssen, bevor das Aushärten einsetzen soll. Das verwendete Material ist Kunststoff und die Schichtdicke 10 µm.

Die US 5,503,785 A beschreibt ein Verfahren zum selektiven Aufbauen eines Fremdkörpers, bei dem aus getrennten Düsen Spritzmaterial und Trennmaterial ausgegeben wird, wobei die Düsen in ihrem Höhenversatz zueinander einstellbar sind, um zu erreichen, dass Körpermaterial auf eine tiefer oder schräg darunter liegende Schicht auf Stützmaterial aufgebracht werden kann. Stützmaterial und Körpermaterial wird dagegen nicht direkt nebeneinander aufgebracht.

Auch hier wird Kunststoff als Material verwendet.

### III. Darstellung der Erfindung

### a) Technische Aufgabe

Es ist daher die Aufgabe gemäß der Erfindung, ein **3D-Printing**-Verfahren sowie eine dafür geeignete Vorrichtung zur Verfügung zu stellen, die auch für die Herstellung von großvolumigen und niederpreisigen Bauteilen geeignet sind.

### b) Lösung der Aufgabe

Diese Aufgabe wird durch die Merkmale des Anspruchs 1 gelöst. Vorteilhafte Ausführungsformen ergeben sich aus den Unteransprüchen.

Durch das Aufbringen der nächsten Schicht, bevor die eine Schicht darunter oder gar noch mehrere Schichten darunter ausgehärtet ist, insbesondere vollständig ausgehärtet ist, wird das Verfahren auf eine Vielzahl von Bindungsarten und Bindern erweitert, die relativ langsam abbinden im Vergleich zu den bisher üblichen speziellen Kunststoffen und deren Art der Bindung.

Hier können beispielsweise als Füllmaterial die gleichen Füllmaterialien wie bei Beton, also Sand, Kies oder ein Gemenge aus beiden, verwendet werden, während als Binder nicht nur Zement - vor allem in flüssiger oder pastöser Form als Zementschlämme oder Zementpaste - und darüber hinaus die gesamte Palette der im Betonbau verwendeten schneller abbindenden Binder, zum Beispiel Gips oder Binder auf Zementbasis oder auf Kunststoffbasis zum Einsatz kommt.

Auch Holzleim und andere Binder auf natürlicher Basis stehen - je nach Anwendungszweck des herzustellenden Formkörpers - zur Verfügung. Ebenso ist Holzmehl ein unter Umständen geeignetes Füllmaterial. Damit stehen sowohl von Seiten des Füllmaterials als auch von Seiten des Binders sehr kostengünstige und in großer Menge verfügbare Materialien zur Verfügung.

Der Nachteil ist, dass Zusatzmaßnahmen getroffen werden müssen, um die tiefer liegende, noch nicht ausgehärtete Schicht mit einer neu aufgebrachten Schicht belasten zu können, da sie ja in der Regel hierfür selbst noch nicht ausreichend druckstabil ist.

Eine erste, in der Praxis jedoch kaum realisierbare, Möglichkeit besteht darin, dass die darunter liegende Schicht noch nicht vollständig ausgehärtet aber dennoch bereits so druckstabil ist, dass die nächste Schicht darüber bereits aufgebracht werden kann.

Sofern dies jedoch nicht der Fall ist, kommt als zweite Möglichkeit in Betracht, an den Begrenzungsflächen des Formkörpers während dessen Aufbau, also dessen Aushärtezeit, ein Stützmaterial anliegen zu lassen, welches beispielsweise ein unerwünschtes Verformen der noch nicht ausgehärteten Schichten in die Breite verhindert.

Hierbei muss wiederum nach dem Herstellungsverfahren unterschieden werden:
Beim 3D-Printing wird mittels einer Düse das Körpermaterial, aus dem der Formkörper hergestellt wird, Schicht für Schicht und ausschließlich im Bereich des Formkörpers aufgetragen und dadurch der Formkörper hoch gezogen.

Für die Zwecke der vorliegenden Anmeldung soll klargestellt werden, dass trotz der Verwendung des Begriffes "Düse" hiermit jede Art von Auslassöffnung gemeint ist, auch wenn sie nicht die düsentypische Verengung aufweist.

Bei diesem Verfahren wird also mittels einer oder mehrerer Düsen jeweils ein Strang eines Materials neben dem anderen ausgebracht, wobei die Stränge des noch nicht ausgehärteten Materiales sich kontaktieren und teilweise durchmischen und im ausgehärteten Zustand daher eine Struktur ergeben, in der die ursprünglich einzelnen aufgebrachten Stränge nicht mehr zu erkennen sind.

Das Problem stellen hierbei die Bereiche der frisch aufgebrachten Schicht nahe der Begrenzungsflächen des Formkörpers dar, in der Regel der äußeren Begrenzungsflächen, aber wenn der Formkörper innere Hohlräume aufweist, auch der inneren Begrenzungsflächen:
Sofern das aufgebrachte Körpermaterial ausreichend weich und pastös ist, wird es sich ohne weitere Zusatzmaßnahmen in die Breite ausdehnen, vor allem wenn die nächste aufgebrachte Schicht darauf zu lasten beginnt.

Erfindungsgemäß wird dem entgegen getreten, indem auf der Außenseite der Begrenzungsflächen Stützmaterial angeordnet wird, welches zusammen mit dem Formkörper hochgezogen wird.

In einer bevorzugten Ausführung wird mittels einer Düse ein Strang aus Körpermaterial entlang des Randes der aktuellen Schicht des aufzubauenden Formkörpers gelegt und gleichzeitig oder nur mit geringer zeitlicher Verzögerung auf der Außenseite der Begrenzungsfläche ein Strang aus Stützmaterial.

Da das Ziel bei der Herstellung eines Formkörpers in der Regel darin besteht, eine möglichst maßhaltige Gestalt zu erzeugen und darüber hinaus meist auch eine glatte, absatzfreie Oberfläche, werden erfindungsgemäß die beiden Stränge aus Körpermaterial und Stützmaterial in Verlaufsrichtung vorzugsweise direkt nebeneinander ausgebracht zum Beispiel mit schräg gegeneinander gerichteten Düsen, sodass die beiden Stränge mit dem Ausbringungsdruck gegeneinander gedrückt werden und dadurch eine anschließende weitere Verformung der Außenseite des Stranges aus Körpermaterial nicht mehr eintreten kann.

Zu diesem Zweck sollte das Stützmaterial ein spezifisches Gewicht und/oder eine Körnung aufweisen, die etwa dem des Körpermaterials entspricht, oder die Körnung des Stützmaterials kleiner ist als die des Körpermaterials.

Abseits der Begrenzungsflächen kann sowohl der Formkörper einerseits als auch das Stützmaterial andererseits entweder mit gleichartigen Düsen oder mit Düsen größeren Querschnitts, insbesondere größerer Breite, ausgebracht werden, um das Füllen in der Fläche schneller zu erledigen.

Das Stützmaterial kann dabei ein nur geringfügig oder auch überhaupt nicht aushärtendes Material sein, bevorzugt wird es jedoch feucht ausgebracht. Falls es aushärtet, sollte entweder der Aushärtevorgang des Stützmaterials vorzugsweise schneller erfolgen als der des Körpermaterials oder umgekehrt.

Der herzustellende Körper kann im Übrigen in seinem Inneren aus unterschiedlichen Materialien bestehen, und die unterschiedlichen Körpermaterialien werden von separaten Düsen innerhalb der einzelnen Schichten eingebracht. Auf diese Art und Weise können beispielsweise Körper erzeugt werden, die aus einem sehr harten und stabilen dünnwandigen Außenmaterial und einem weniger stabilen, beispielsweise isolierenden Innenmaterial bestehen oder auch im Inneren Hohlräume aufweisen, die für die Verwendung des Bauteils von Bedeutung sind, beispielsweise für Installationen, als Wärmetauscher oder ähnliches.

Auch kann beispielsweise das Körpermaterial von Innen nach Außen auch in seiner Körnigkeit variieren, indem beispielsweise nahe der Begrenzungsflächen ein sehr feinkörniges Material verwendet wird, um eine glatte, feinporige Begrenzungsfläche zu erzeugen, während weiter im Inneren des Formkörpers grobkörniges Füllmaterial, beispielsweise in Form von grobkörnigen Zuschlagsstoffen wie etwa Kies, verwendet werden können.

Um eine glatte absatzlose Begrenzungsfläche des späteren Formkörpers zu erzeugen, an der die einzelnen aufgebrachten Schichten nicht mehr sichtbar sind, können weitere Zusatzmaßnahmen durchgeführt werden:
Beispielsweise kann direkt aus der Düse oder auch separat auf die Begrenzungsfläche der frisch aufgebrachten Schicht des Formkörpers ein Glättungsmittel, ein Schnellbinder o.ä. aufgebracht werden, oder die Aushärtung der Außenfläche des äußersten Stranges wird beschleunigt durch Aufbringen von Wärme, beispielsweise in Form von heißer Luft, oder in Form von elektromagnetischer Strahlung, beispielsweise von UV-Strahlung, indem das Körpermaterial und/oder das Stützmaterial, zumindest nahe der Begrenzungsflächen, ein Material enthält, welches auf diese Art und Weise sehr schnell ausgehärtet werden kann.

Ebenso wie ein entsprechender Schnellbinder oder ein Glättungsmittel direkt beim Ausbringen mittels der Düse für das Körpermaterial, beispielsweise in speziellen Zusatzauslässen auf der Außenseite der Düse, also an den Begrenzungsflächen des Formkörpers, erfolgen kann, können über solche Zusatzauslässe in der Düse auch spezielle Komponenten dem Körpermaterial zugemischt werden, welche erst ein schnelles Aushärten durch Wärme oder z.B. UV-Licht oder andere physikalische oder chemische Umgebungsbedingungen ermöglichen, die dann vorzugsweise jedoch zur Einwirkung gebracht werden sollen, bevor die entsprechende Außenseite der neuen Schicht durch das Stützmaterial abgedeckt wird.

Um eine noch bessere Oberfläche zu erzielen und insbesondere ein Anhaften oder Einsickern von Bestandteilen des Körpermaterials in das Stützmaterial oder umgekehrt zu vermeiden, kann an die Begrenzungsflächen bei jeder Schicht zwischen Stützmaterial und Körpermaterial eine Trennschicht aus einem Trennmittel eingebracht werden, welches vorzugsweise wiederum mittels einer separaten, senkrecht stehenden Düse ausgebracht wird. Das Trennmittel wird dabei nur noch so gering wie notwendig pastös sein und insbesondere nicht aushärtend oder kaum aushärtend, denn es soll vor allem sofort nach dem Ausbringen eine seitliche Barriere für den äußersten Strang aus Körpermaterial bilden. Als Trennmittel können auch sehr kostengünstige Materialien wie Lehm, Ton, Wachs o. ä. verwendet werden, die später auch wiederverwendbar sein können.

Je nach Geschwindigkeit der Aushärtung vor allem der Außenseite des Körpermaterials kann auch das Entlangführen einer Trennklinge an der Begrenzungsfläche, also zwischen Körpermaterial und Stützmaterial, ausreichend sein. Die Trennklinge kann aus einem festen z.B. Blech oder einem flexiblen Materialstreifen wie etwa einem Stück Folie, bestehen und direkt an der Düse befestigt sein. Dadurch wird auch eine mechanisch glättende Wirkung der Außenfläche des Körpermaterials erreicht.

Da in dem erfindungsgemäßen Verfahren vorgesehen ist, auch große Formkörper mit Abmessungen von zum Teil mehreren Metern herzustellen, wird das Material in Schichtdicken von meist mehr als einem Millimeter, besser mehr als zwei Millimetern, besser mehr als fünf Millimetern, ausgebracht, um einen schnellen Aufbau zu ermöglichen.

Da die Außenwand des Formkörpers nicht immer genau lotrecht zur Schichtebene steht, sind die Düsen, die vor allem den äußersten Strang und damit die Begrenzungsfläche des Formkörpers erzeugen, vorzugsweise um ihre Längsachse schwenkbar in Anpassung an die momentane Orientierung des Formkörpers bei der herzustellenden Schicht. Die Düse besitzt dann vorzugsweise zumindest eine ebene Seitenfläche, bevorzugt besitzt die Düse einen rechteckigen Querschnitt, und kann somit mit einer ihrer Seitenflächen parallel zur Lage der Begrenzungsfläche bei dieser Schicht eingestellt werden.

Eine solche Trennklinge kann auch beheizt sein und durch ihre Wärme das daran entlang gleitende Körpermaterial aushärten oder die Trennklinge kann Auslassöffnungen für Chemikalien oder zur Erzeugung eines bestimmten physikalischen Züstandes in seiner Umgebung aufweisen, beispielsweise UV-Licht abgeben, um einen entsprechenden ausgewählten Binder an der Begrenzungsfläche des Formkörpers noch während des Entlanggleitens der Trennklinge auszuhärten.

Der durch die Trennklinge entstehende Zwischenraum zwischen Stützmaterial und Körpermaterial wird spätestens durch Aufbringen der nächsten Schichten und deren Gewichtsbelastung geschlossen, kann aber auch schon vorher durch entsprechende, z.B. an der Trennklinge befestigte, Leitbleche, die im Stützmaterial eine Verlagerung von Stützmaterial in Richtung auf den Formkörper zu bewirken, erzielt werden.

Eine andere Möglichkeit besteht darin, außerhalb der Begrenzungsfläche auf das Füllmaterial Wasser oder ggf. auch einen leicht abbindenden Binder aufzubringen, der dann möglichst schnell aber nur leicht aushärten soll. Das Befeuchten des Füllmaterials außerhalb des Formkörpers hat den Zweck, dass an der Begrenzungsfläche kein Feuchtigkeitsgradient entsteht, der ein Nach-Außen-Sickern der z.B. Zementschlämme oder des verwendeten aufgebrachten teilweise flüssigen Binders nach außen in das Stützmaterial nach sich ziehen könnte.

Diese Art der Herstellung von großvolumigen Teilen, insbesondere Betonteilen, bietet weitere Vorteile:
Es können in dem Formkörper Hohlräume hergestellt werden, die entweder leer bleiben oder im Zuge des Aufbaus mit einem andersartigen Material gefüllt werden. Diese Hohlräume können auch komplizierte, hinterschnittene Gestalt haben, wie sie mittels konventioneller, formgebundener Herstellungsverfahren nicht herstellbar wären.

Ein weiterer Vorteil liegt in der einfachen Einbringung von Armierungen, wobei man hier nicht auf Stahlarmierungen wie im konventionellen Betonbau beschränkt ist, sondern vor allem Armierungen aus flexiblen Fasern wie Glas, Kunststoff oder Kohlenstoff, sei es in Strangform oder als vernetzte Gewebe, geeignet sind:
Diese flexiblen Armierungen passen sich zum Einen jeder gewünschten Form des Formkörpers an, können vor allem aber auf einfache Art und Weise von einer gewickelten Vorratsrolle aus in den Formkörper während des Schichtaufbaus eingebracht werden.

Ein solcher Armierungsspender mit einer Vorratsrolle oder mehreren Vorratsrollen kann dabei entweder an den Düsen oder den Halterungen für die Düsen mitgeführt werden oder separat zugeführt werden. Dabei kann vor allem ein Gewebe, beispielsweise in Streifen, in den Formkörper eingebracht werden, wobei die Orientierung der Streifen parallel zur Ebene der aufzubringenden Schichten oder auch lotrecht dazu verlaufen kann.

Bei lotrechtem Verlauf können die streifenförmigen Armierungen wie die Düse parallel zu den Begrenzungsflächen des Formkörpers gelegt werden. Eine andere Möglichkeit besteht jedoch auch darin, solche streifenförmigen oder strangförmigen Armierungen mit einem Ende am Boden des Behälters, also am unteren Ende des Formkörpers, zu befestigen und dann mit dem Aufbau des Formkörpers zunehmend nach oben abzuwickeln, was keineswegs in einer geraden Richtung erfolgen muss, sondern bei einer gebogenen Außenkontur dieser Kontur folgen kann.

Als **Vorrichtung** zur Durchführung dieser Verfahren ist zunächst einmal ein Behälter notwendig, in dem der Formkörper beginnend vom Behälterboden aus aufgebaut werden kann. Zur späteren vereinfachten Entnahme des fertigen Formkörpers kann der Behälter beispielsweise eine oder mehrere herabklappbare Wände aufweisen oder kippbar ausgestaltet sein oder oben offen sein.

Vorteilhaft wäre dabei auch, wenn der Boden des Behälters gegenüber den Wänden höhenverstellbar ist, so dass zu Beginn des Aufbaus des Formkörpers der Behälterboden hoch angeordnet wird und dann jeweils um die Dicke einer Schicht abgesenkt wird. Die gesamte Beweglichkeit in der vertikalen würde dann primär durch den Behälterboden realisiert, was die konstruktive Ausbildung der die Materialien aufbringenden Vorrichtungen und Düsen stark vereinfachen würde.

Ferner wird - abhängig vom verwendeten Verfahren - mindestens ein Vorratsbehälter für das Material benötigt und mindestens eine Düse, die sowohl in der horizontalen Z-Ebene als auch in der Z-Richtung gesteuert verfahrbar ist. Des Weiteren ist eine Steuerung notwendig, die den gesamten Verfahrensablauf steuert.

Dabei ist es unerheblich, ob die Düse an einem horizontal verfahrbaren X-Schlitten befestigt ist, der wiederum an einem horizontal verfahrbaren Y-Schlitten sitzt - wie es beispielsweise von Druckern bekannt ist - und beide gemeinsam in der Höhe, also in Z-Richtung einstellbar sind, oder stattdessen die jeweilige Düse an einer Art Roboterarm befestigt ist, und damit frei im Raum zumindest innerhalb des Behälters verfahrbar ist, vorzugsweise auch aus dem Behälter heraus bewegbar ist, vor allem um ein späteres einfaches Entnehmen des Formkörpers zu ermöglichen oder einen Werkzeugwechsel oder Düsenwechsel vorzunehmen.

Bei Anwendung des dem 3D-Printing nahe kommenden **vorliegenden** Verfahrens werden mindestens zwei Vorratsbehälter und mit diesen verbunden und jeweils mindestens eine Düse benötigt, wobei sich in dem einen Vorratsbehälter Stützmaterial und in dem anderen Körpermaterial befindet.

Eine der Düsen für das Aufbringen der randseitigen Stränge, insbesondere die Düse zum Ausbringen des Körpermaterials, kann an ihrem Austritt eine Beheizung oder Austrittsöffnungen für ein Benetzungsmittel und/oder einen Schnellbinder und/oder heiße Luft und/oder elektromagnetische Strahlen zum schnelleren Aushärten der Begrenzungsfläche des Formkörpers besitzen.
**Ferner** kann die Vorrichtung einen oder mehrere Armierungs-Spender umfassen. Bei flexiblen Armierungen wie Strängen oder Gewebebändern aus Kunststoff, Glas, Kohlenstoff oder ähnlichen flexiblen Materialien können diese auf einfache Art und Weise auf einer Vorratsrolle aufgewickelt vorgehalten werden, von der sie zunehmend abgewickelt werden. Diese Armierungen können in der Ebene der jeweiligen Aufbauschicht verlegt werden, sowohl parallel zu als auch senkrecht zur Hauptebene der Schicht, oder sie können auch alle Schichten durchlaufend mit ihrer Haupterstreckungsrichtung lotrecht zur Schichtebene mit zunehmenden Schichtaufbau eingebracht werden.

Auch konventionelle Armierungen aus Baustahl sind möglich und können beispielsweise mit Hilfe eines Roboterarmes Stück für Stück während des Schichtaufbaus mit eingebracht und mit den bereits vorhandenen Armierungen ebenfalls mit Hilfe des Roboters verschweißt werden.

Des Weiteren können Wärmestrahler, Ultraviolett-Strahler oder Austrittsöffnungen für heiße Luft oder Chemikalien vorhanden sein, entweder direkt an der Düse oder an einer separaten, gesteuert verfahrbaren Vorrichtung, beispielsweise einem separaten Roboterarm.

Ferner kann die Vorrichtung eine spezielle Trennmittel-Düse umfassen, mittels der ein Trennmittel auf der Begrenzungsfläche zwischen Stützmaterial und Körpermaterial ausgebracht wird. Die Trennmittel-Düse kann Bestandteil einer der anderen Düsen sein oder eine separat geführte Düse.

Die Vorrichtung kann ferner eine Trennklinge umfassen, die aus starrem oder flexiblen Material besteht und ebenfalls entlang der Begrenzungsfläche gezogen wird, während oder kurz nach dem Aufbringen des randseitigen Stranges des Formkörpers. Die Trennklinge kann beheizt sein und/oder ebenfalls Auslassöffnungen für Chemikalien, heiße Luft, ultraviolette Strahlung oder ähnliches aufweisen, die allesamt dem Zwecke des Glättens und/oder schnellen Verfestigens der Begrenzungsfläche des Formkörpers dienen.

### c) Ausführungsbeispiele

Ausführungsformen gemäß der Erfindung sind im Folgenden beispielhaft näher beschrieben. Es zeigen:

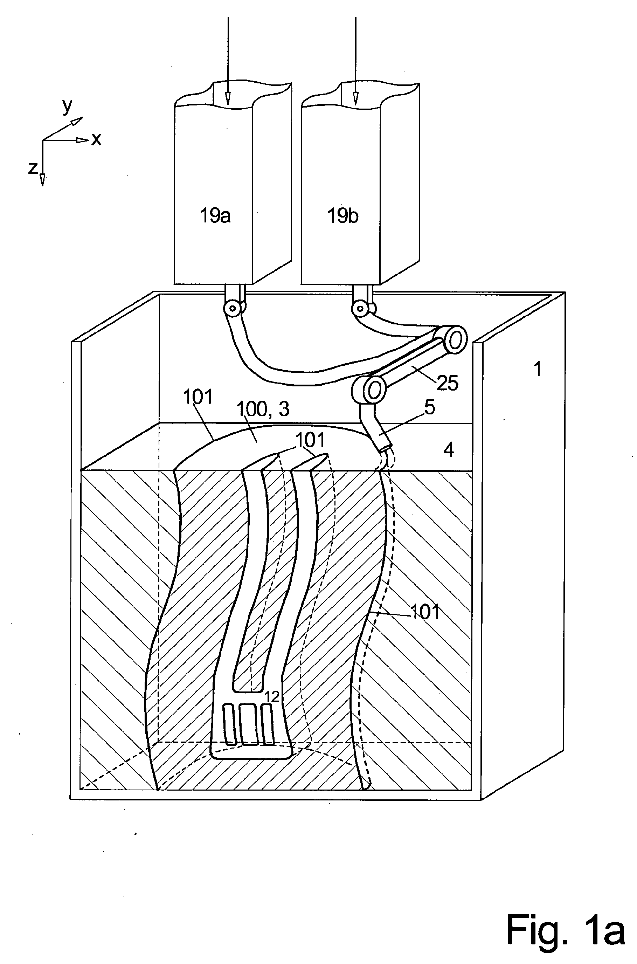

- Figur 1a:: eine erste Ausführungsform gemäß der Erfindung,

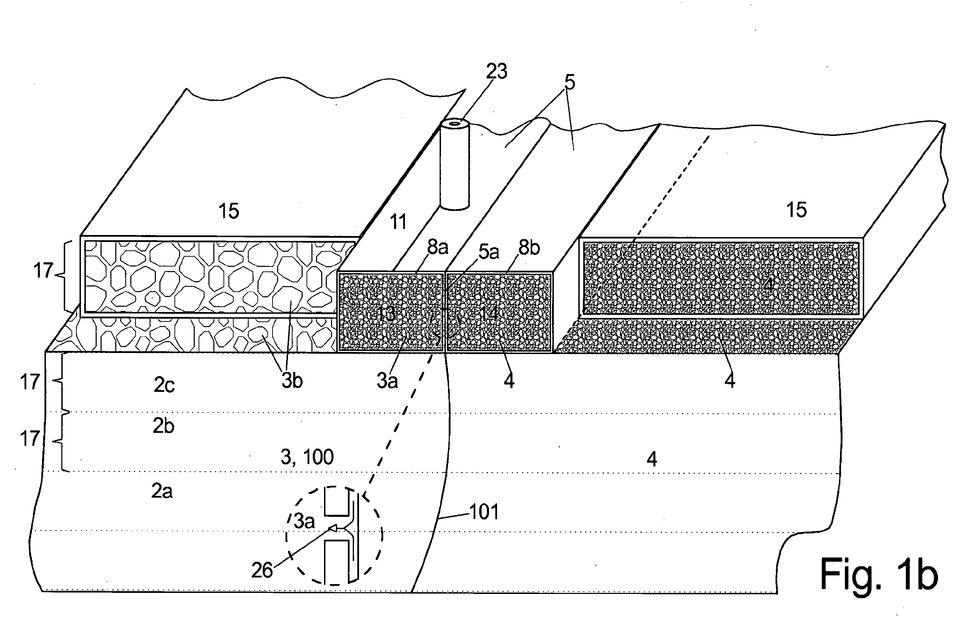

- Figur 1b:: eine Detaildarstellung aus Figur 1a in Schnittdarstellung,

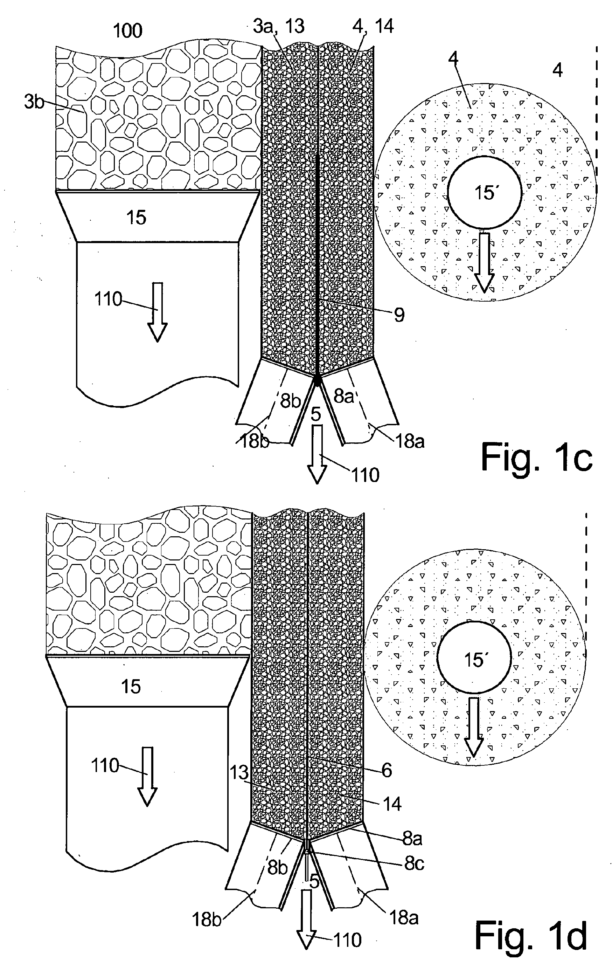

- Figur 1c,d:: Detaildarstellungen aus Figur 1a in der Aufsicht.

**Figur 1a** zeigt die Vorrichtung für die Erfindung in einem Vertikalschnitt:
Dabei wird in einem oben offenen Behälter **1** von unten nach oben, also beginnend am Boden des Behälters **1,** ein Formkörper **100** aus horizontal übereinander liegenden Schichten **2**a,b,c aufgebaut, indem schichtweise Körpermaterial **3** zur Bildung des gewünschten Formkörpers **100** als auch um den Formkörper **100** herum Stützmaterial **4** aus mindestens einer Düse **5** aufgebracht wird, die entlang der horizontalen Fläche im Inneren des Behälters **1** gesteuert verfahrbar ist und mit Vorratsbehältern **19**a,b in Verbindung steht, aus denen das aus der Düse **5** austretende Material **3** und **4** zugeliefert wird.

Eine vergrößerte Darstellung im Vertikalschnitt ist in **Figur 1b** dargestellt, in der links der Begrenzungsfläche **101** der Formkörper **100** aus Körpermaterial **3** entsteht, während rechts davon der Behälter mit Stützmaterial **4** angefüllt ist.

Das Stützmaterial **4** um den gewünschten Formkörper **100** herum wird benötigt, damit sich das Material **3** bzw. **3**a des Formkörpers bis zu seiner endgültigen Aushärtung nicht über die gewünschte Begrenzungsfläche **101** hinaus zur Seite ausdehnt.

Diese Gefahr ist natürlich bei dem frisch entlang des Randes des Formkörpers aufgebrachten Strang **13** am höchsten, weshalb auf der Außenseite der Begrenzungsfläche **101,** also angrenzend an diesen Strang **13,** vorzugsweise zeitgleich, ein Strang **14** aus Stützmaterial **4** aufgebracht wird, welches etwa das gleiche spezifische Gewicht wie das Körpermaterial **3** besitzt und vorzugsweise etwa auch die gleiche Körnigkeit wie das Körpermaterial **3** im Randbereich.

Zu diesem Zweck hat die Düse **5** vorzugsweise zwei Auslassöffnungen **8**a,b und entsprechende Zuführungsleitungen für die Materialien **3a, 4,** und zumindest an der gegeneinander gerichteten Begrenzungsfläche eine ebene Außenseite **5**a, um eine ebene Begrenzungsfläche **101** zu erzeugen.

Die Düse **5** wird - wie in Figur **1**a erkennbar - in einer horizontalen Ebene entlang eines vollständigen Umfanges des zu erzeugenden Formkörpers **100** geführt. Die weniger kritischen, da weiter ab von den der Begrenzungsfläche **101** liegenden, Bereiche des Formkörpers **100** als auch des Stützmaterials **4** in dieser Ebene können mit Hilfe von anderen, zum Beispiel breiteren, Düsen **15** diese Schichtdicke **17** auffüllen.

Dabei ist in Figur **1**b dargestellt, dass zu diesem Zweck weiter im Inneren des Formkörpers **100** über die Düse **15** auch ein anderes, zum Beispiel grobkörnigeres, Körpermaterial **3**b ausgebracht werden kann, welches ja später optisch am fertigen Formkörper **100** nicht zu erkennen ist. Vorzugsweise sind die Düsen **15** gegenüber der Düse **5** in Fortschrittsrichtung **110** zurückversetzt.

Dies alles gilt nicht nur für die äußeren Begrenzungsflächen **101** des Formkörpers **100,** sondern auch für eventuell innen liegende Begrenzungsflächen **101,** falls der Formkörper **100** Hohlräume **12** aufweisen soll. Vorzugsweise werden dann auch diese inneren Begrenzungsflächen **100** mit der Düse **5** abgefahren.

Anstelle der Hohlräume **12** können auch Bereiche aus einem nochmals anderen Körpermaterial im Inneren des Formkörpers **100** erzeugt werden, wofür dann für diese weiteren Materialien für dieses weitere Körpermaterial auch eine weitere Düse **5** bzw. eine weitere Auslassöffnung an der Düse **5** benötigt wird.

Vorzugsweise können die einzelnen Auslassöffnungen einer Düse **5** ohnehin separat gesteuert; also geöffnet oder geschlossen, werden mit Hilfe der Steuerung der Vorrichtung, die auch die Bewegungen der Düsen steuert.

Figur **1a** lässt erkennen, dass durch diesen schichtweisen Aufbau auch kompliziert geformte Hohlräume **12** einbringbar sind, die mit klassischen, formgebundenen Herstellverfahren nicht erzielbar wären.

Die Düse **5** beginnt, die nächste Schicht aufzulegen, wenn die darunter liegende Schicht über die gesamte Fläche des Behälters **1** vervollständigt ist oder zumindest die Verfüllung neben den randseitigen Strängen **13, 14** aus der Düse **5** z. B. mittels der breiteren Düsen **15** soweit vorhanden ist, dass die Belastung durch das Aufbringen eines neuen Stranges **13, 14** möglich ist.

Wie die **Figur 1c** zeigt, kann es sich bei den Düsen **15** für das Material abseits der Randbereiche des Formkörpers **100** und des Stützmaterials **4** entweder um breitere Düsen handeln, oder auch - wie im Bereich des Stützmaterials **4** dargestellt - um einen vertikal nach unten gerichteten offenen Rohrauslass, der einen entsprechend breiten Schüttkegel hinterlässt und eine entsprechende Spur durch Vorwärtsbewegen in Fortschrittsrichtung **101** zusammen mit der Düse **5** oder gegenüber dieser in Fortschrittsrichtung etwas nach hinten versetzt.

Eines der Probleme bei einem solchen Herstellen eines Formkörpers **100** ist die Erzielung einer glatten, optisch ansprechenden Begrenzungsfläche **110,** und die Vermeidung der zu starken Anhaftung des Stützmaterials **4** an dieser Begrenzungsfläche **101** des fertigen Formkörpers **100:**
Hierzu können mehrere Maßnahmen einzeln oder einander ergänzend durchgeführt werden:
   Wie die **Figuren 1c und 1d** zeigen, werden die randseitigen Stränge **13,14** aus Körpermaterial **3** oder **3a** einerseits und Stützmaterial **4** andererseits gut aneinander angenähert und sogar mit Druck gegeneinander gepresst, indem die Austrittsrichtungen **18** a, b der Mündungen **8**a,b der Düse **5** für die beiden Materialien so schräg zur Fortschrittsrichtung **110** gestellt sind, dass sie etwas gegeneinander gerichtet sind.

Ergänzend kann beim Ausbringen der beiden Stränge **13,14** eine an der Düse **5** befestigte Trennklinge **9,** die vorzugsweise aus flexiblen Material wie etwa einem Folienstreifen besteht, mitgezogen werden, so dass die beiden Stränge **13,14** erst einige Zeit nach dem Austreten aus der Düse **5** in direkten Kontakt miteinander geraten und bis zu diesem Zeitpunkt vor allem der Strang **13** aus Körpermaterial **3** oder **3**a bereits etwas ausgehärtet ist, zumindest an seiner dem Strang **14** zugewandten Außenseite.

Dies kann einerseits erreicht werden, indem dem Körpermaterial **3**a, welches aus der Düse **5** austritt und den randseitigen Strang **13** bildet, ein anderer, zum Beispiel schnell härtender, Härter zugemischt ist, als dem weiter im Körperinneren zugeführten Körpermaterial **3**b. Dies kann ferner verbessert werden, indem beispielsweise - wie in Figur **1**b erkennbar - in der Innenfläche der Außenseite der Austrittsöffnung **8**b der Düse **5** Auslässe **26** vorhanden sind, über die entweder heiße Luft zum schnelleren Aushärten des Stranges **13** in diesem Bereich ausgebracht wird oder ein zusätzlicher Schnellbinder die Außenseite des Stranges **13** benetzt, um dessen schnelle Aushärtung zu bewirken.

**Figur 1d** zeigt, dass anstelle der Trennklinge **9** auch eine Lage aus einem Trennmittel **6** senkrecht stehend zwischen den beiden Strängen **13,14** ausgebracht werden kann mit Hilfe einer separaten Austrittsöffnung **8c** an der Düse **5** zwischen den Austrittsöffnungen **18**a und **18**b.

Figur **1****b** zeigt ferner eine erste Möglichkeit, wie eine Armierung **11 -** in Form in diesem Fall eines flexiblen Streifens aus beispielsweise einem Fasergewebe oder mehreren Fasersträngen - in den Formkörper **100** mit eingearbeitet werden kann, in diesem Fall an dem Übergang zwischen dem randseitigen Strang **13** aus einem ersten Körpermaterial **3**a und dem weiter innen liegenden, evtl. gröberen Körpermaterial **3**b:
Zu diesem Zweck ist die flexible Armierung **11** auf einem Armierungsspender **23** in Form einer Vorratsrolle aufgewickelt, welcher beispielsweise an der Düse **5** fixiert werden kann, und die streifenförmige Armierung **11** wird beim Aufbringen der Stränge **13, 14** auf der körper-innenseitigen Seite des randseitigen Stranges **13** durch Abwickeln aufgebracht und befindet sich dann parallel laufend zur äußeren Begrenzungsfläche **101** des späteren Formkörpers **100.** In der Höhe ergänzen sich diese Armierungen **11,** können auch eine nach oben über die jeweils aufgebrachte Schicht etwas vorstehende Breite besitzen und auf diese Art und Weise in der Höhenrichtung, der Z-Richtung, miteinander in Kontakt treten und eine durchgängige Armierung bilden.

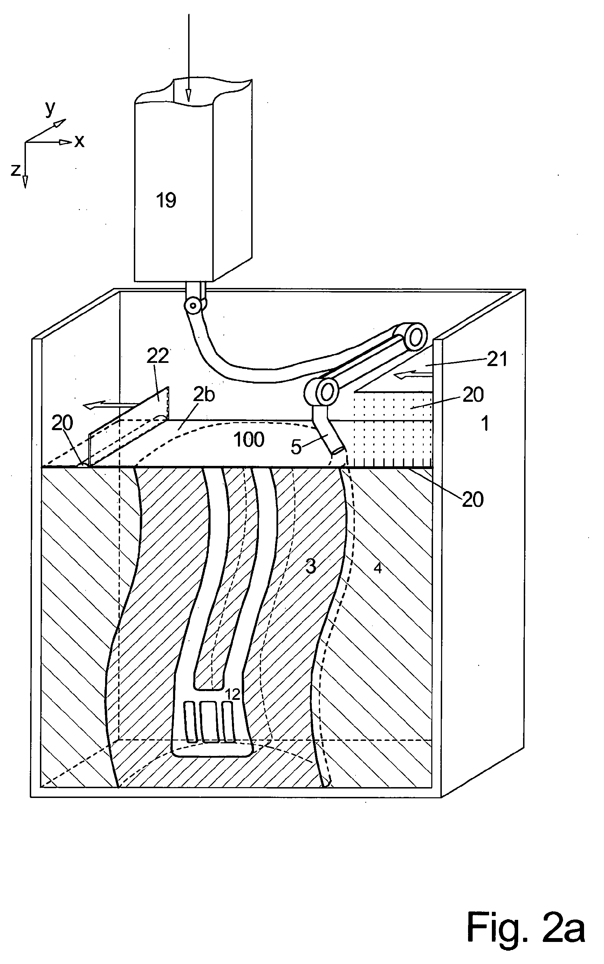

**Figur 2a - 2b** dienen der Erläuterung eines **weitergebildeten Verfahrens nach dem sogenannten selektiven Härten, welches nicht Gegenstand des vorliegenden Patentes ist:**
Dabei besteht das Körpermaterial **3,** aus dem der Formkörper **100** entstehen soll, aus zwei Komponenten, nämlich einem Füllmaterial **20** und einem dieses Füllmaterial **20** aushärtenden Binder **7.** Das Füllmaterial **20** ist gleichzeitig das Stützmaterial **4,** wobei es als Stützmaterial ohne Binder oder mit einem gegebenenfalls anderen, schneller oder leichter aushärtenden Binder, getränkt werden kann.

Zu diesem Zweck wird eine neue Schicht **2b** aus Füllmaterial **20** durchgehend über die gesamte Innenfläche des Behälters **1** aufgebracht, indem zum Beispiel das Füllmaterial **20** mittels einer Spaltdüse **21,** die sich über die gesamte Länge oder Breite des Behälters **1** erstreckt und quer dazu bewegt wird, flächig im Behälter **1** ausgebracht und vorzugsweise anschließend mittels eines Abziehers **20** auf eine definierte Schichthöhe **17** gebracht wird.

Auf diese Art und Weise werden nicht nur die Bereiche um den Formkörper **100** herum, sondern auch eventuell im Formkörper **100** einzuarbeitende Hohlräume **12** zunächst vollständig mit Füllmaterial **20** angefüllt, welches dann nach Fertigstellen des Formkörpers **100** nicht nur von dessen Außenflächen, sondern auch aus dessen Hohlräumen **12** heraus entfernt werden muss, was bei einem losen Füllmaterial als Stützmaterial **4** jedoch keine Probleme bereiten sollte, zumindest mit zusätzlicher Unterstützung durch Spülung mittels zum Beispiels Wasser oder Druckluft.

Diese zweite Vorgehensweise erschwert aber auch, dass innerhalb des Formkörpers unterschiedliche Materialien verwendet werden, da immer das Gleiche Füllmaterial **20** vorhanden ist.

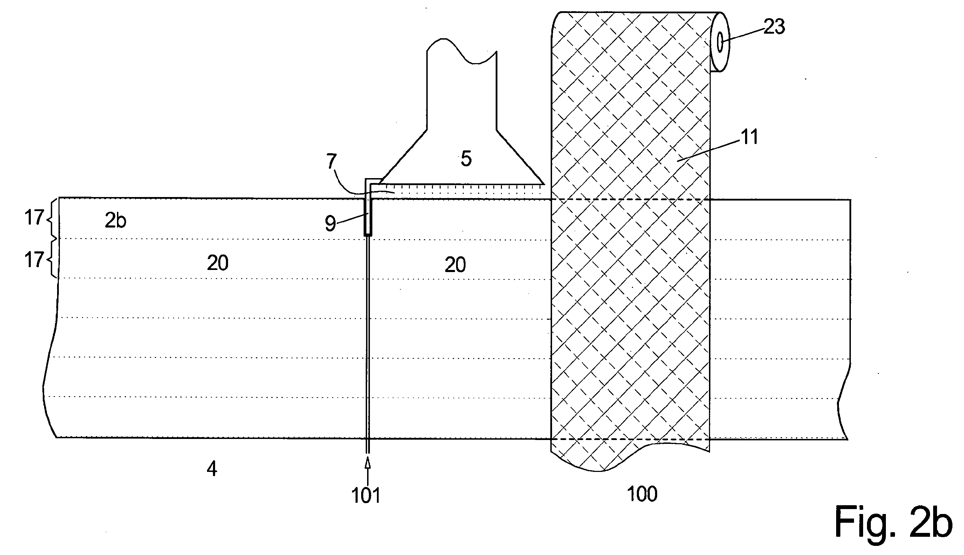

Anschließend wird - wie besser in Figur 2b erkennbar - mittels einer Düse **5** lediglich der Binder **7,** meist in flüssiger Form oder als Schlämme, zugeführt aus dem Vorratsbehälter **19,** nur im Bereich des Formkörpers **100** auf dem Füllmaterial **20** ausgebracht und dadurch der Formkörper **100** in seiner obersten Schicht **2b** ausgehärtet.

Dabei wird vorzugsweise mit dem Randbereich des Formkörpers **100** nahe dessen Begrenzungsfläche **101** begonnen, jedoch werden gleichzeitig oder anschließend auch die gesamten übrigen Querschnittsflächen des Formkörpers **100** mit Binder **7** benetzt.

Dabei muss die Schichtdicke **17** im Vergleich zur Menge des aufgebrachten Binders **7** pro Flächeneinheit und dessen Flüssigkeit so gewählt werden, dass der Binder **7** die gesamte Schichtdicke **17** der letzten Schicht aus Füllmaterial **20** auch zuverlässig durchdringen kann.

Um eine saubere Begrenzungsfläche **101** zu erzielen, können auch hier wieder Hilfsmaßnahmen durchgeführt werden, beispielsweise kann **(****Fig. 2b****)** eine Trennklinge **9,** z. B. befestigt an der Düse **5,** zum Begrenzen des Randbereiches befestigt sein, die über die Schichtdicke **17** dieser letzten Schicht eintaucht und das Hinübersickern von Binder **7** in den Bereich außerhalb des Formkörpers **100** vermeiden hilft.

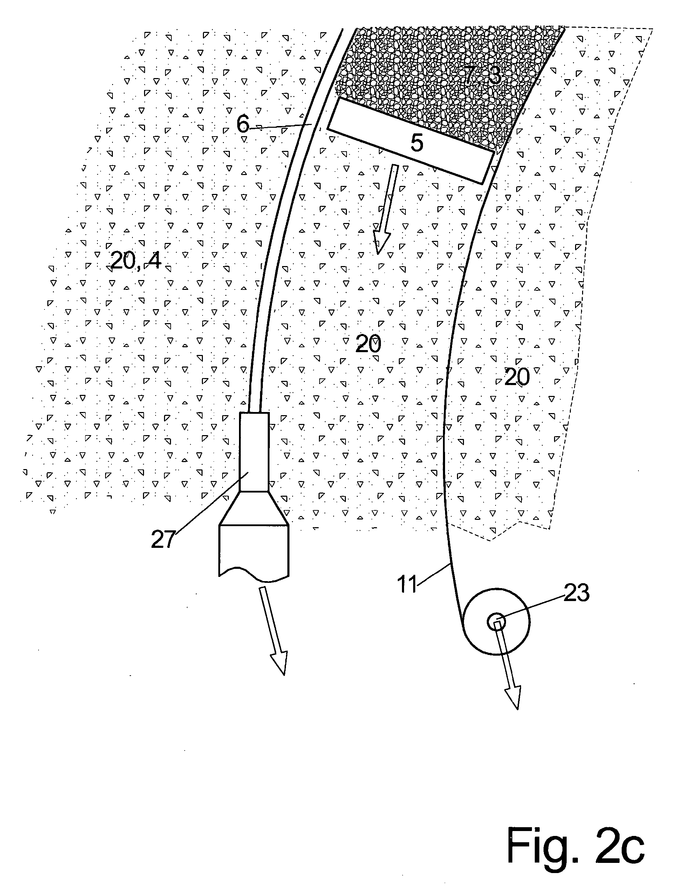

Anstelle der Trennklinge **9** kann **(****Fig. 2c****)** auch wiederum mittels einer separaten Düse **27** hier eine Schicht aus Trennmittel **6** aufgebracht werden, die dies dauerhaft verhindert. Dabei muss das Trennmittel **6** so gewählt werden, dass es nach Fertigstellen des Formkörpers **100** leicht von dessen Außenflächen entfernt werden kann.

**Figur 2b** zeigt ferner eine weitere Möglichkeit des Einbringens einer Armierung **11,** auch hier in Form eines Gewebestreifens, abgenommen von einer Vorratsrolle als Armierungsspender **23.**

Dabei verläuft die Armierung - sei es ein Gewebestreifen oder einzelne, nebeneinander liegende Stränge - vertikal, und ist beispielsweise ursprünglich am Boden des Behälters **1** befestigt gewesen und wird mit dem Schichtaufbau nach oben gezogen.

Eine solche immer über die oberste Schicht vorstehende Armierung **11** ist natürlich ein Hindernis beim Aufbringen der nächsten Schicht und muss berücksichtigt werden, indem zum Beispiel die Spaltdüse **21** und/oder der Abzieher **22** in einer solchen Richtung bewegt werden und so ausgestaltet, gegebenenfalls unterteilt, sind, dass sie an der Armierung **11** vorbeiführen.

### BEZUGSZEICHENLISTE

- **1**: Behälter
- **2a, b**: Schicht
- **3, 3a, b**: Körpermaterial
- **4**: Stützmaterial
- **5**: Düse
- **5'**: Längserstreckung
- **5a**: Außenseite
- **6**: Trennmittel
- **7**: Binder
- **8a, b**: Mündung
- **9**: Trennklinge
- **10**: Hauptebene
- **11**: Armierung
- **12**: Hohlraum
- **13**: Strang
- **14**: Strang
- **15**: Düse
- **16**: Schicht
- **17**: Schichtdicke
- **18**: Austrittsrichtungen
- **19a, b**: Vorratsbehälter
- **20**: Füllmaterial
- **21**: Spaltdüse
- **22**: Abzieher
- **23**: Armierungsspender
- **24**: Luftdüse
- **25**: Roboterarm
- **26**: Auslass
- **27**: Düse
- **100**: Formkörper
- **101**: Begrenzungsflächen
- **110**: Fortschrittsrichtung

## Patentansprüche

1. Verfahren zum schichtweisen Aufbau eines dreidimensionalen Formkörpers **(100)** in einem Behälter **(1)** aus flüssigem oder pastösem, aushärtendem Körper-Material **(3),** wobei
- die nächste Schicht **(2b)** aufgebracht wird, bevor zumindest die Schicht **(2a)** darunter ausgehärtet ist,
**dadurch gekennzeichnet, dass**
- zur Bildung der Begrenzungsflächen **(101)** des Formkörpers ein Strang **(13)** aus Körpermaterial **(3)** gleichzeitig direkt neben einen Strang **(14)** aus Stützmaterial **(4)** gelegt wird und dadurch eine anschließende weitere Verformung der Außenseite des Stranges **(13)** aus Körpermaterial (3) nicht mehr eintreten kann,
- das Material **(3, 4)** in Schichtdicken **(17)** von mehr als **2** mm ausgebracht wird.

2. Verfahren nach Anspruch 1,
**dadurch gekennzeichnet, dass**
der Aufbau des Formkörpers **(100)** durch Aufbringen des Körpermaterials **(3)** aus wenigstens einer geführten Düse **(5)** erfolgt und um den Formkörper **(100)** herum aus einer Düse **(5)** Stütz-Material **(4)** schichtweise aufgebracht wird.

3. Verfahren nach Anspruch 1 oder 2,
**dadurch gekennzeichnet, dass**
das Stützmaterial **(4)** gar nicht aushärtet, wenn jedoch, dann schneller als das Körpermaterial **(3).**

4. Verfahren nach einem der vorhergehenden Ansprüche,
**dadurch gekennzeichnet, dass**
als Körpermaterial **(3)** unterschiedliche Materialien **(3a, b),** insbesondere stabileres Material **(3a)** für die Außenwände des Formkörpers **(100)** als für das Innere und weniger stabiles für das Innere des Formkörpers **(100),** verwendet wird.

5. Verfahren nach einem der vorhergehenden Ansprüche 2 - 4,
**dadurch gekennzeichnet, dass**
an der Mündung **(8a,** b) der Düse **(5)**, insbesondere über einen Teil von deren Umfang, ein Glättungsmittel, ein Binder, ein Schnellbinder, Wärme in Form von Luft oder anderer Form, oder elektromagnetische Strahlung ausgebracht wird.

6. Verfahren nach einem der vorhergehenden Ansprüche 2 - 5,
**dadurch gekennzeichnet, dass**
zur Herstellung der Begrenzungsflächen **(101)** des Formkörpers **(100)** kleinere Düsen **(5)** als die abseits der Begrenzungsflächen **(101)** benutzten Düsen **(15)** verwendet werden.

7. Verfahren nach einem der vorhergehenden Ansprüche,
**dadurch gekennzeichnet, dass**
das Material **(3, 4)** in Schichtdicken **(17)** von mehr als **5** mm ausgebracht wird.

8. Verfahren nach einem der vorhergehenden Ansprüche 2 -7,
**dadurch gekennzeichnet, dass**
die Düse **(5)** um ihre Längserstreckung **(5')** schwenkbar ist zur Anpassung der Lage ihrer Außenseite **(5a)** an die Lage der gewünschten herzustellenden Begrenzungsfläche **(101).**

9. Verfahren nach einem der vorhergehenden Ansprüche,
**dadurch gekennzeichnet, dass**
zwischen den Strang **(13)** aus Körpermaterial **(3)** und den Strang **(14)** aus Stützmaterial **(4)** eine Schicht **(16)** aus einem Trennmittel **(6)** gelegt wird und das Trennmittel **(6)** so gewählt wird, dass es sich mit dem Körpermaterial **(3)** nicht verbindet.

10. Verfahren nach einem der vorhergehenden Ansprüche,
**dadurch gekennzeichnet, dass**
das Aushärten des Randes eines Stranges mit Wärme und/oder ultravioletten Licht beschleunigt wird, entweder des Randes des Stützmaterials **(4)** oder des Randes des Formkörpers **(100).**

11. Verfahren nach einem der vorhergehenden Ansprüche,
**dadurch gekennzeichnet, dass**
beim schichtweisen Aufbau eine Armierung **(11)** mit eingebracht wird in Form von abgewickelten Fasersträngen oder Gewebebändern, oder in Form von einzelnen Metallteilen.

12. Verfahren nach einem der vorhergehenden Ansprüche,
**dadurch gekennzeichnet, dass**
eine Trennklinge **(9)** an der Grenze zwischen Formkörper **(100)** und Stützmaterial **(4)** entlang geführt wird.

## Claims

1. A method for building up a three dimensional form element (100) in layers from liquid or pasty curing element material (3) in a container (1), wherein
- a new layer (2b) is applied before at least a layer (2a) below is cured,
**characterized in that**
- a strand (13) made from the element material is simultaneously placed directly adjacent to a strand (14) made from a support material (4) in order to form boundary surfaces (101) of the form element so that a subsequent additional deformation of an outside of the strand (13) made from the element material (3) cannot occur anymore,
- the material (3, 4) is applied in layer thicknesses (17) of more than 2 mm.

2. The method according to claim 1,
**characterized in that**
the form element (100) is built up by applying the element material (3) from at least one controlled nozzle (5), wherein the support material (4) is applied in layers about the form element (100) from the nozzle (5).

3. The method according to claim 1 or 2,
**characterized in that**
the support material (4) does not cure at all, however when it cures it cures faster than the element material (3).

4. The method according to one of the preceding claims,
**characterized in that**
different materials (3a, b) are used for the element material (3), in particular a more stable material (3a) for outer walls of the form element (100) than for an interior of the form element and less stable material is used for the interior of the form element (100).

5. The method according to one of the preceding claims 2 - 4,
**characterized in that**
a smoothing agent, a bonding agent, a quick bonding agent, heat in a form of air or in another form or electromagnetic radiation is applied at an outlet (8a, b) of the nozzle (5), in particular over a portion of a circumference of the nozzle.

6. The method according to one of the preceding claims 2 - 5,
**characterized in that**
in order to produce boundary surfaces (101) of the form element (100) smaller nozzles (5) are used which are smaller than nozzles (15) that are used remote from the boundary surfaces (101).

7. The method according to one of the preceding claims,
**characterized in that**
the material (3, 4) is applied in layer thicknesses (17) of more than 5 mm.

8. The method according to one of the preceding claims 2- 7,
**characterized in that**
the nozzle (5) is pivotable about its longitudinal extension (5') for adapting a position of its outside (5a) to a position of boundary surfaces (101) to be produced.

9. The method according to one of the preceding claims,
**characterized in that**
a layer (16) made from a release agent (6) is placed between the strand (13) made from the element material (3) and the strand (14) made from the support material (4) and the release agent (6) is selected so that it does not connect with the element material (3).

10. The method according to one of the preceding claims,
**characterized in that**
curing an edge of a strand is accelerated by heat and/or ultraviolet radiation, either of an edge of the support material (4) or of an edge of the form element (100).

11. The method according to one of the preceding claims,
**characterized in that**
a support (11) is introduced in a form of unwound fiber strands or fabric tapes or in a form of individual metal elements during layer build up.

12. The method according to one of the preceding claims,
**characterized in that**
a cutting blade (9) is run along a boundary between the form element (100) and the support material (4).

## Revendications

1. Procédé destiné au montage en couches d'un corps de formage en trois dimensions (100) dans un récipient (1) à partir de matériau de corps (3) durcissant, liquide ou pâteux,
- la couche suivante (2b) étant appliquée avant qu'au moins la couche (2a) de dessous ne soit durcie,
**caractérisé en ce que**
- pour la formation des surfaces de délimitation (101) du corps de formage, un boudin (13) de matériau de corps (3) étant placé simultanément directement à côté d'un boudin (14) de matériau d'appui (4) et par là même, une autre déformation contiguë du côté extérieur du boudin (13) de matériau de corps (3) ne peut plus se produire,
- le matériau (3, 4) est réparti dans des épaisseurs de couche (17) de plus de 2 mm.

2. Procédé selon la revendication 1,
**caractérisé en ce que**
le montage du corps de formage (100) est effectué par application du matériau de corps (3) à partir d'au moins une buse guidée (5) et du matériau d'appui (4) est appliqué par couches autour du corps de formage (100) à partir d'une buse (5).

3. Procédé selon la revendication 1 ou 2,
**caractérisé en ce que**
le matériau d'appui (4) ne durcit pas du tout, si toutefois c'était le cas, il durcirait alors plus rapidement que le matériau de corps (3).

4. Procédé selon l'une quelconque des revendications précédentes,
**caractérisé en ce que**
différents matériaux (3a, b), en particulier un matériau plus stable (3a) pour les parois extérieures du corps de formage (100) que pour l'intérieur et moins stable pour l'intérieur du corps de formage (100) est utilisé en tant que matériau de corps (3).

5. Procédé selon l'une quelconque des revendications précédentes 2 à 4,
**caractérisé en ce que**
un moyen de lissage, un liant, un liant rapide, de la chaleur sous la forme d'air ou sous une autre forme ou un rayonnement électromagnétique est réparti sur l'embouchure (8a, b) de la buse (5), en particulier sur une partie de sa périphérie.

6. Procédé selon l'une quelconque des revendications précédentes 2 à 5,
**caractérisé en ce que**
de plus petites buses (5) que les buses (15) utilisées à l'écart des surfaces de délimitation (101) sont utilisées pour la fabrication des surfaces de délimitation (101) du corps de formage (100).

7. Procédé selon l'une quelconque des revendications précédentes,
**caractérisé en ce que**
le matériau (3, 4) est réparti dans des épaisseurs de couche (17) de plus de 5 mm.

8. Procédé selon l'une quelconque des revendications précédentes 2 à 7,
**caractérisé en ce que**
la buse (5) peut être pivotée autour de son étendue longitudinale (5') pour l'adaptation de la position de son côté extérieur (5a) à la position de la surface de délimitation (101) souhaitée à fabriquer.

9. Procédé selon l'une quelconque des revendications précédentes,
**caractérisé en ce que**
une couche (16) composée d'un moyen de séparation (6) est placée entre le boudin (13) de matériau de corps (3) et le boudin (14) de matériau d'appui (4) et le moyen de séparation (6) est choisi de sorte qu'il ne se relie pas au matériau de corps (3).

10. Procédé selon l'une quelconque des revendications précédentes,
**caractérisé en ce que**
le durcissement du bord d'un boudin est accéléré par la chaleur et/ou la lumière ultraviolette ou du bord du matériau d'appui (4) ou du bord du corps de formage (100).

11. Procédé selon l'une quelconque des revendications précédentes,
**caractérisé en ce que**
une armature (11) est introduite lors du montage en couches sous la forme de boudin de fibre ou bandes de tissu déroulées ou sous la forme de parties métalliques individuelles.

12. Procédé selon l'une quelconque des revendications précédentes,
**caractérisé en ce que**
une lame de séparation (9) est guidée le long de la limite entre le corps de formage (100) et le matériau d'appui (4).
